# EUROPEAN PATENT APPLICATION

(11) **EP 2 541 728 A2**
(43) Date of publication of application: **02.01.2013**
(21) Application number: 12171431.5
(22) Date of filing: 11.06.2012
(51) Int. Cl.: H02J 7/00, H01M 10/44

(54) **Cell balancing device**

(30) Priority: 30.06.2011 JP 2011145169; 13.07.2011 JP 2011154518
(71) Applicant: Kabushiki Kaisha Toyota Jidoshokki, Kariya-shi, Aichi 448-8671 (JP)
(72) Inventor: KURAISHI, Mamoru, Kariya-shi, Aichi 448-8671 (JP)
(74) Representative: TBK

(57) **Abstract**

A cell balancing device (1) includes a plurality of serially connected battery modules (8-1 through 8-n), an external generator (3), a transformer 16 including a first coil (20) and a plurality of second coils (21-1 through 21-n) connected in parallel to each of the battery modules (8-1 through 8-n), a switch (17) provided between the external generator (3) and the first coil (20), a cell balancing circuit (5) and a battery ECU (6) for electromagnetically coupling the first coil (20) and each of the second coils (21-1 through 21-n) by turning on and off the switch (17) when the difference between the output voltages of the battery modules (8-1 through 8-n) equals or exceeds a threshold.

## Description

### FIELD

The present invention relates to a cell balancing device for suppressing the variance of the output voltage each of a plurality of battery modules including one or more rechargeable batteries configuring a battery loaded into a vehicle.

### BACKGROUND

A battery loaded into a vehicle such as a hybrid vehicle, an electric vehicle, etc. can be configured by a plurality of serially connected rechargeable batteries to realize a high output voltage (for example, the patent document 1).

For the battery with the above-mentioned configuration, it is necessary to suppress the entire degradation by minimizing the variance of the output voltage of each rechargeable battery caused by repeating charging and discharging.

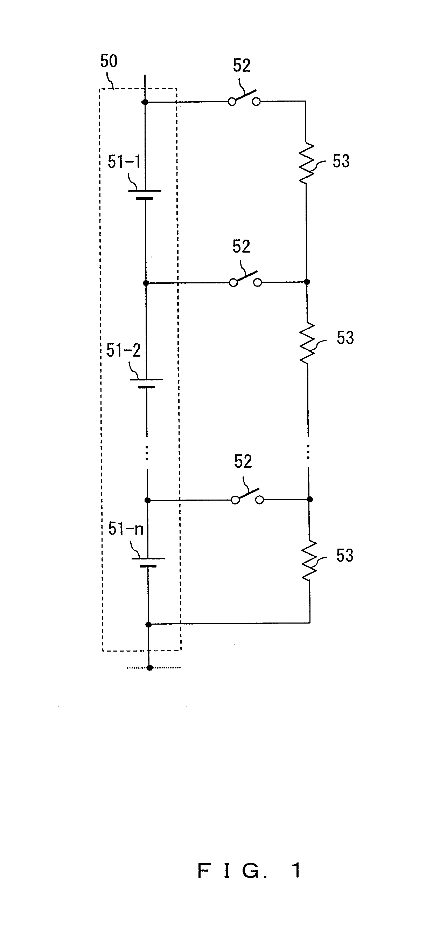

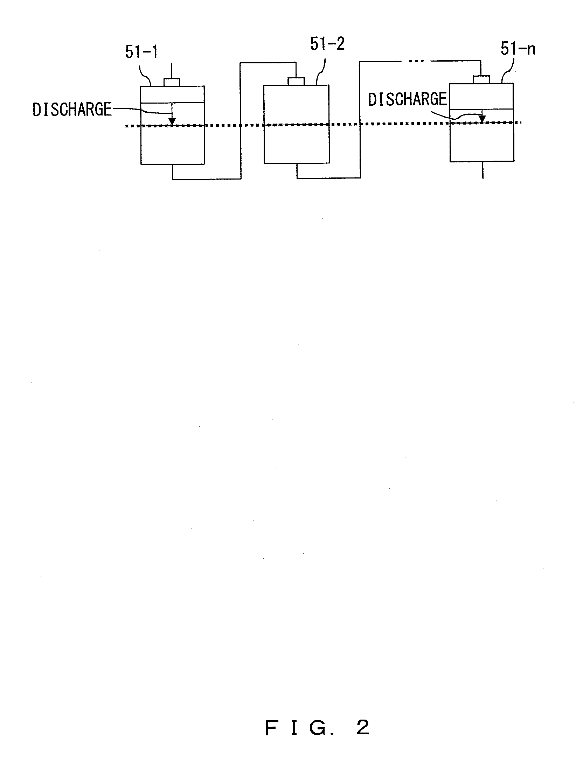

For example, as a medium of equalizing the output voltage of each rechargeable battery (hereafter referred to as cell balancing), as illustrated in FIG. 1, there is so-called cell balancing in the passive system in which a switch 52 and a resistor 53 are connected to each of a plurality of rechargeable batteries 51 (51-1 through 51-n) configuring a battery 50. In the cell balancing in the passive system, each rechargeable battery 51 is discharged by sequentially turning each switch 52 on and off to adjust the output voltage of each rechargeable battery 51 to the output voltage of the rechargeable battery 51 indicating the lowest degradation level and the lowest output voltage. For example, assume that the output voltage of a rechargeable battery 51-2 is the lowest after using or charging the battery 50 with the lowest degradation level of the rechargeable battery 51-2, that is, the smallest internal resistor of the rechargeable battery 51-2. In this case, each rechargeable battery 51 other than the rechargeable battery 51-2 is sequentially discharged by sequentially turning on and off the switch 52 connected to each of the rechargeable batteries 51. Then, as illustrated in FIG. 2, the output voltage of each rechargeable battery rechargeable battery 51 other than the rechargeable battery 51-2 is adjusted to the output voltage of the rechargeable battery 51-2.

However, since the cell balancing in the passive system is configured so that each rechargeable battery other than the rechargeable battery having the lowest output voltage can be discharged with the output voltage of each rechargeable battery adjusted to the lowest output voltage, the energy available in the entire battery is reduced after the cell balancing.

As another cell balancing technique, there is so-called cell balancing in the active system in which the output voltage of each rechargeable battery is equalized by charging and discharging each rechargeable battery through a transformer (for example, the patent document 2).

Thus, the cell balancing in the active system can suppress the reduction of the energy available in the entire battery.

However, the power of the main battery for driving a vehicle in which a plurality of rechargeable batteries are serially connected is consumed for charging an auxiliary machinery battery for supply of power to electrical equipment such as a car navigation system etc. , and is consumed for driving an air-conditioner. Thus, the main battery for drive of a vehicle is to provide electric power for equipment other than a driving motor. Therefore, when there is an increasing amount of power supply to the equipment other than the driving motor, the amount of energy available in the entire battery is reduced, which possibly causes the decrease in distance traveled.
[Patent Document 1] Japanese Laid-open Patent Publication No. 2008-042970
[Patent Document 2] Japanese Laid-open Patent Publication No. 2001-339865

### SUMMARY

The present invention aims at providing a cell balancing device capable of suppressing the variance of the output voltage of each of a plurality of battery cells configuring a main battery for driving a vehicle, and suppressing the decrease of the energy available in the entire battery.

The cell balancing device includes: a battery provided with a plurality of battery modules having one or more rechargeable batteries; a battery monitor circuit for monitoring the output voltage of the battery module; a cell balancing circuit for equalizing the output voltage of the battery module; an external generator for supplying power to the cell balancing circuit; and a control circuit for controlling the cell balancing on the cell balancing circuit so that the output voltage of each battery module can be stepped up by the power supplied by the external generator when the difference between the output voltages of the battery modules detected by the battery monitor circuit equals or exceeds a threshold.

Thus, the output voltage of each battery module is equalized and the output voltage rises with the power supplied from the external power supply, thereby suppressing the variance of the output voltage of each battery module and suppressing the reduction of the energy available in the entire battery after the cell balancing.

The cell balancing device according to the present invention can also be configured by the cell balancing circuit including a first coil connected to the external power supply, a second coil transformer-coupled to the first coil and connected in parallel with each of the battery modules, and a first switch provided between the external power supply and the first coil; and a control circuit for electromagnetically coupling the first and second coils by turning on and off the first switch when the difference between the output voltages of the battery modules equals or exceeds the threshold.

When the difference between the output voltages of the battery modules equals or exceeds the threshold, the control circuit can also be configured to control the cell balancing on the cell balancing circuit until the lower output voltage is adjusted to the higher output voltage in the output voltages of the battery modules.

Thus, the output voltage of the battery module can be adjusted to the higher output voltage, and the output voltage of each battery module can be equalized.

In addition, the cell balancing circuit includes a plurality of second switches. The battery monitor circuit includes a voltage detection circuit and a cell balancing execution determination circuit for turning on and off the first switch when the voltage difference equals or exceeds the threshold in each voltage detected by the voltage detection circuit. The control circuit can also be configured to control the drive of the plurality of second switches when the output voltage of each battery module is detected, thereby connecting the battery module sequentially to the voltage detection circuit and outputting the output voltage of each battery module sequentially to the voltage detection circuit, and to control the drive of each of the plurality of second switches when the difference between the highest voltage and the lowest voltage of each voltage detected by the voltage detection circuit equals or exceeds the threshold, thereby connecting in parallel each battery module and the second coil, and electromagnetically couple the first and second coils by turning on and off the first switch.

Thus, since it is not necessary to provide the voltage detection circuit for each battery module, the size of the circuit can be reduced.

The cell balancing device according to the present invention includes: a main battery having a plurality of battery modules configured by one or more battery cells; a generator; a cell balancing circuit for equalizing the output voltage of each of the plurality of battery modules by passing a current from a battery module outputting a voltage higher than an average voltage of the output voltage of each of the plurality of battery modules to a battery module outputting a voltage lower than the average voltage; a DC/AC conversion circuit for converting the DC power supplied from the main battery into the AC power; and a control circuit for controlling the operation of each of the cell balancing circuit and the DC/AC conversion circuit. When the DC power is converted into the AC power by the DC/AC conversion circuit, the control circuit supplies power from the generator to each of the plurality of battery modules through the cell balancing circuit.

Thus, the power supplied from the generator to the main battery can be used for the AC power converted by the DC/AC conversion circuit. Thus, since the power consumption of the main battery can be suppressed, the possible distance traveled can be extended.

In addition, the main battery includes a first battery module and a second battery module. The cell balancing circuit includes a first transformer having first and second coils, a first switch provided between the first battery module and the first coil, a second transformer having third and fourth coils, a second switch provided between the second battery module and the third coil, and a third switch provided between the second and fourth coils and the generator. When the DC/AC conversion circuit converts DC power into AC power, the control circuit respectively turns on and off the first and second switches respectively, and constantly turns on the third switch.

Furthermore, the control circuit can be configured to control the operation of the cell balancing circuit so that the power supplied from the main battery can be supplied to an auxiliary machinery battery through the cell balancing circuit.

In addition, the cell balancing circuit includes a fourth switch provided between the second and fourth coils and the auxiliary machinery battery, and the control circuit can be configured to respectively turn on and off the first and second switches and constantly turns on the fourth switch when the power supplied from the main battery is supplied to the auxiliary machinery battery through the cell balancing circuit.

### BRIEF DESCRIPTION OF DRAWINGS

FIG. 1 is an explanatory view of the cell balancing in the passive system;
FIG. 2 illustrates the change in output voltage of each battery module during the cell balancing in the passive system;
FIG. 3 illustrates the cell balancing device according to an embodiment of the present invention;
FIG. 4 is an example of the battery monitor circuit and the cell balancing circuit;
FIG. 5 is a schematic diagram of an example of the timing chart of each switch in the on/ off state;
FIG. 6 illustrates a change of the output voltage of each battery module during the cell balancing according to an embodiment of the present invention;
FIG. 7 illustrates the cell balancing device according to another embodiment of the present invention;
FIG. 8 is an example of the cell balancing circuit and the DC/AC conversion circuit;
FIG. 9 is a schematic diagram of an example of the timing chart of the on/off state of each switch; and
FIG. 10 is a schematic diagram of another example of the timing chart of the on/off state of each switch.

### DESCRIPTION OF EMBODIMENTS

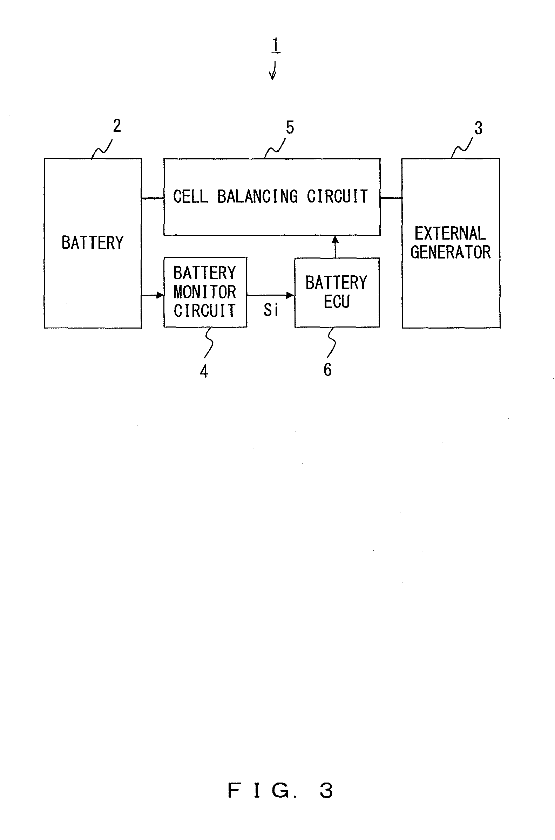

FIG. 3 illustrates the cell balancing device according to an embodiment of the present invention.

A cell balancing device 1 illustrated in FIG. 3 includes: a battery 2 having a plurality of battery modules configured by one or more rechargeable batteries; an external generator 3; a battery monitor circuit 4 for monitoring the output voltage of each battery module; a cell balancing circuit 5 for equalizing the output voltage of each battery module; and a battery ECU (electronic control unit) 6. It is assumed that the cell balancing device 1 according to the present embodiment is to be loaded into a vehicle such as a plug-in hybrid vehicle, an electric vehicle, a fork list, etc. It is also assumed that the battery 2 supplies power to the motor/generator to be loaded into a vehicle, and acquires the regenerated power from the motor/generator. The external generator 3 is configured by, for example, a solar generator and supplies power to the cell balancing circuit 5, and outputs a DC voltage nearly equal to or a little higher than the output voltage of the battery module when it is fully charged. In addition, it is assumed that the battery ECU 6 receives power from a power supply other than the battery 2, for example, from the auxiliary machinery battery. The control circuit described in the claims of the patent can also be configured by the battery ECU 6 etc.

When the voltage difference equals or exceeds a threshold in the output voltage of each battery module, the battery monitor circuit 4 outputs a cell balancing execution instruction signal Si indicating that the cell balancing is to be performed.

When the ignition signal IG to be output from the upper ECU for controlling the entire vehicle indicates a low level (when the motor/generator does not use the battery 2 while parking of a vehicle, etc.), and if the battery monitor circuit 4 outputs a cell balancing execution instruction signal Si indicating that the cell balancing is to be performed, the battery ECU 6 controls the operation of the cell balancing circuit 5, equalizes the output voltage of each battery module of the battery 2, and steps up the output voltage of each battery module by the power supplied from the external generator 3.

Thus, the cell balancing device 1 according to the present embodiment can suppress the variance of the output voltage of each battery module in the battery 2, thereby extending the life of the battery 2.

In addition, the cell balancing device 1 according to the present embodiment steps up the output voltage of each battery module of the battery 2 by the power supplied from the external generator 3 during the cell balancing.

Thus, while suppressing the variance of the output voltage of each battery module of the battery 2, the reduction of the energy available in the battery 2 can be suppressed after the cell balancing.

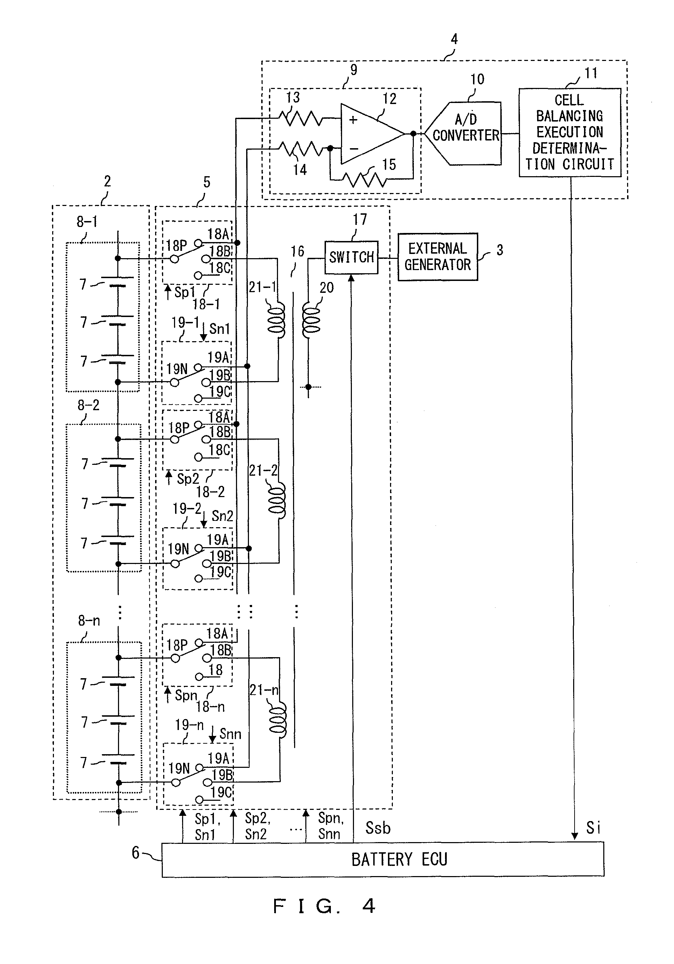

FIG. 4 is an example of the battery monitor circuit 4 and the cell balancing circuit 5. It is assumed that the battery 2 is configured by n serially connected battery modules 8 (battery modules 8-1 through 8-n) configured by three serially connected battery cells 7 (for example, a rechargeable battery such as a lithium ion secondary battery, a nickel-metal hydride rechargeable battery, etc.). The number of battery cells 7 configuring one battery module 8 is not limited to three. The same configuration as the configuration illustrated in FIG. 3 is assigned the same reference numeral.

The battery monitor circuit 4 in FIG. 4 includes a voltage detection circuit 9, an A/D converter 10, and a cell balancing execution determination circuit 11.

The voltage detection circuit 9 is a follower circuit provided with an operational amplifier 12 and resistors 13 through 15, and outputs a difference between the voltage input to the plus input terminal of the operational amplifier 12 through the resistor 13 and the voltage input to the minus input terminal of the operational amplifier 12 through the resistor 14. That is, it outputs the voltage corresponding to the output voltage of one battery module 8 of the plurality of battery modules 8. The configuration of the voltage detection circuit 9 is not limited to the configuration illustrated in FIG. 2.

The A/D converter 10 converts the voltage output from the operational amplifier 12 from analog data to digital data.

When the digitized output voltage of the battery module 8 equals or exceeds the threshold, the cell balancing execution determination circuit 11 changes the cell balancing execution instruction signal Si from the low level to the high level.

The cell balancing circuit 5 illustrated in FIG. 4 includes a transformer 16, a switch 17 (first switch), n switches 18 (switches 18-1 through 18-n) (second switch) and n switches 19 (switches 19-1 through 19-n) (second switch).

The transformer 16 includes a first coil 20 (first coil) whose one end is connected to the external generator 3 through the switch 17 and whose other end is connected to the ground (for example, the virtual ground connected to the body etc. of a vehicle), and a plurality of second coils 21 (second coils 21-1 through 21-n) (second coil) transformer-coupled to the first coil 20. For example, assuming that ratio of the number of turns of the first coil 20 to the total number of turns of second coils 21 is 1:1, and the ratio of the number of turns of each second coil 21 is the same.

The switch 17 is configured by a switching element, for example, a MOSFET (metal oxide semiconductor field effect transistor) etc., and turned on and off by a control signal Ssb output from the battery ECU 6. The duty of the control signal Ssb is, for example, 50%. The frequency of the control signal Ssb can be set by the inductance of the first coil 20 and each second coils 21, the runtime of the cell balancing, etc.

Each switch 18 is configured by, for example, a relay etc., and includes a terminal 18P connected to the plus terminal of each battery module 8, a terminal 18A connected to the plus terminal of the operational amplifier 12 through the resistor 13, a terminal 18B connected to one end of the second coil 21, and a terminal 18C in the open state in which no connection is made. The drive of each switch 18 (switches 18-1 through 18-n) is controlled by a control signal Sp (Sp1 through Spn) output from the battery ECU 6. For example, each switch 18 controls the drive so that the terminal 18P and the terminal 18A can be connected to each other when the control signal Sp indicates the level A, the terminal 18P and the terminal 18B can be connected to each other when the control signal Sp indicates the level B, and the terminal 18P and the terminal 18C can be connected to each other when the control signal Sp indicates the level C. It is assumed that level A > level B > level C.

Each switch 19 is configured by, for example, a relay etc. , and includes a terminal 19N connected to the minus terminal of each battery module 8, a terminal 19A connected to the minus terminal of the operational amplifier 12 through the resistor 14, a terminal 19B connected to the other terminal of the second coil 21, and a terminal 19C in the open state in which no connection is made. The control signals Sn (Sn1 through Snn) output from the battery ECU 6 controls the drive of each switch 19 (switches 19-1 through 19-n). For example, each switch 19 controls the drive so that the terminal 19P and the terminal 19A can be connected to each other when the control signal Sn indicates the level A, controls the drive so that the terminal 19P and the terminal 19B can be connected to each other when the control signal Sn indicates the level B, and controls the drive so that the terminal 19P and the terminal 19C can be connected to each other when the control signal Sn indicates the level C. It is assumed that level A > level B > level C.

For example, when the terminal 18P and the terminal 18A of the switch 18-1 are connected to each other and the terminal 19N and the terminal 19A of the switch 19-1 are connected to each other, the voltage corresponding to the output voltage of the battery module 8-1 is output from the operational amplifier 12.

In addition, for example, when the terminal 18P and the terminal 18B of the switch 18-1 are connected to each other and the terminal 19N and the terminal 19B of the switch 19-1 are connected to each other, the battery module 8-1 and the second coil 21-1 are connected in parallel.

Furthermore, for example, when the terminal 18P and the terminal 18C of the switch 18-1 are connected to each other and the terminal 19N and the terminal 19C of the switch 19-1 are connected to each other, the terminals 18P and 19N are placed in the open state.

Thus, since the switches 18 and 19 are included, the voltage detection circuit 9 and the A/D converter 10 are not to be provided for the battery modules 8-1 through 8-n, the size of the circuit can be reduced.

When the output voltage of each of the battery modules 8-1 through 8-n is detected, the control signals Sp1 through Spn and the control signals Sn1 through Snn sequentially indicate the level A, and the output voltage of each of the battery modules 8-1 through 8-n is sequentially output to the cell balancing execution determination circuit 11 from the voltage detection circuit 9 through the A/D converter 10. The cell balancing execution determination circuit 11 temporarily stores the output voltage of each of the battery modules 8-1 through 8-n in internal memory etc., and determines on each stored output voltage whether or not the difference between the highest output voltage and the lowest output voltage equals or exceeds a threshold, and sets the cell balancing execution instruction signal Si from the low level to the high level when the difference equals or exceeds the threshold. If the cell balancing execution instruction signal Si is changed from the low level to the high level, the battery ECU 6 controls the drive of each of the switches 17 through 19 of the cell balancing circuit 5 and starts equalizing (cell balancing) the output voltage of each of the battery modules 8-1 through 8-n.

When the output voltage of each of the battery modules 8-1 through 8-n is equalized, each of the control signals Sp1 through Spn and the control signals Sn1 through Snn indicates the level B, and the battery modules 8-1 through 8-n and the second coils 21-1 through 21-n are connected in parallel. Furthermore, by turning on and off the switch 17 according to the control signal Ssb, an AC current flows through the first coil 20 by the power supplied from the external generator 3, and the first coil 20 and the second coils 21-1 through 21-n are electromagnetically coupled. In this case, for example, when the output voltage of the battery module 8-1 is higher than the voltage of the second coil 21-1, a current passes from the battery module 8-1 to the second coil 21-1, and the battery module 8-1 is discharged. If the output voltage of the battery module 8-2 is lower than the voltage of the second coil 21-2, a current passes from the second coil 21-2 to the battery module 8-2, and the battery module 8-2 is charged. Thus, by each of the battery modules 8-1 through 8-n charged or discharged through the transformer 16, the output voltage of each of the battery modules 8-1 through 8-n gradually approaches the average value of the output voltage of each of the battery modules 8-1 through 8-n. In this case, by the power supplied from the external generator 3, the average value of the output voltage of the battery modules 8-1 through 8-n rises. Thus, during the cell balancing, the output voltage of each of the battery modules 8-1 through 8-n can be equalized and step up. That is, the variance of the output voltage of each of the battery modules 8-1 through 8-n can be suppressed and the reduction of the energy available in the battery 2 can be suppressed after the cell balancing.

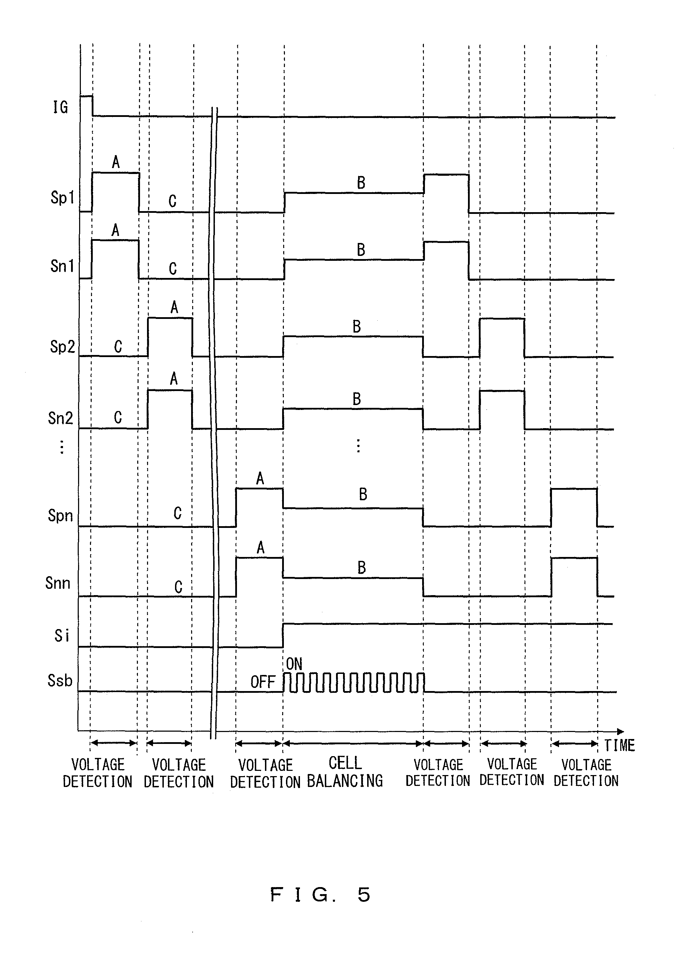

FIG. 5 is a schematic diagram of an example of the timing chart of each of the on/off state of each of the switch 17, the switches 18-1 through 18-n, and the switches 19-1 through 19-n. When the battery 2 is used by a motor/generator during the drive of a vehicle etc., the ignition signal IG output from the upper ECU etc. for controlling the entire vehicle indicates a high level, and the voltage of another battery module 8 is detected, the terminals 18P and 19N of each of the switches 18-1 through 18-n and the switches 19-1 through 19-n are placed in the open state according to the control signals Sp and SN.

First, when the ignition signal IG is set from the high level to the low level, that is, when the battery 2 is not used during the parking of a vehicle etc., the battery ECU 6 sets the control signals Sp1 through Sn1 at the level A, and the battery monitor circuit 4 detects the output voltage of the battery module 8-1. Afterwards, by sequentially setting the control signals Sp2 through Spn and the control signals Sn2 through Snn at the level A, the output voltage of each of the battery modules 8-2 through 8-n is detected.

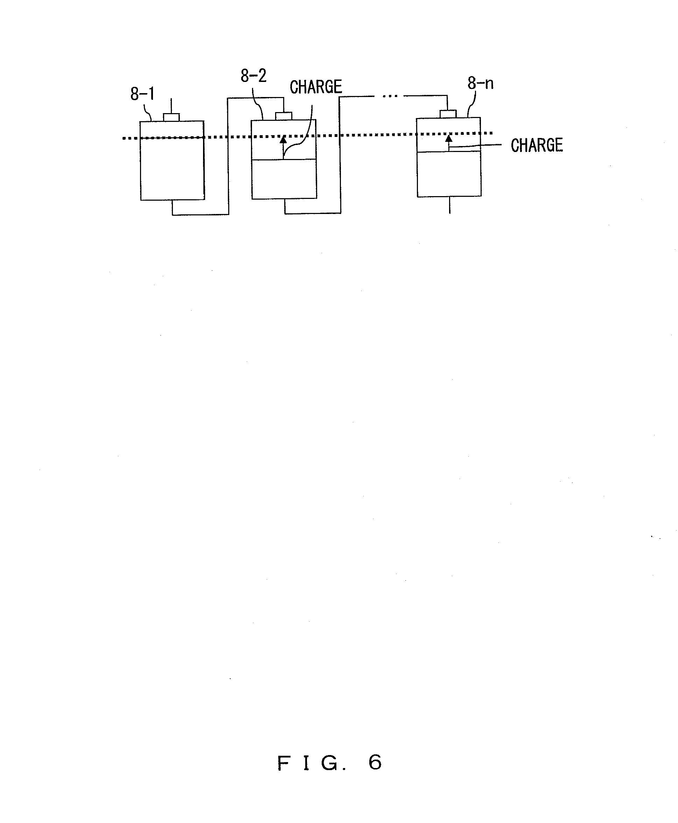

Next, when the cell balancing execution instruction signal Si changes from the low level to the high level, the battery ECU 6 sets the control signals Sp1 through Spn and the control signals Sn1 through Snn at the level B, and turns on and off the switch 17 according to the control signal Ssb. Thus, the battery modules 8-1 through 8-n are charged and discharged to each other through the transformer 16, and charged by the power from the external generator 3. For the time period in which the output voltage of each of the battery modules 8-1 through 8-n is set to be adjusted to the highest output voltage, the battery ECU 6 turns on and off the switch 17. Thus, as illustrated in FIG. 6, the final output voltage of each of the battery modules 8 can be adjusted to the output voltage of the battery module 8 indicating the highest degradation level, that is, the highest internal resistance and the highest output voltage.

When the cell balancing execution instruction signal Si changes from the high level to the low level, the battery ECU 6 turns off the switch 17, and sequentially sets the control signals Sp1 through Spn and the control signals Sn1 through Snn again at the level A, thereby sequentially detecting the output voltage of each of the battery modules 8-1 through 8-n.

Then, if the cell balancing execution instruction signal Si does not change from the low level to the high level after detecting the output voltage of each of the battery modules 8-1 through 8-n, the battery ECU 6 sets the control signals Sp1 through Spn and the control signals Sn1 through Snn at the level C, thereby terminating the cell balancing.

In the embodiment above, immediately after the ignition signal IG indicates the low level, the output voltage of each of the battery modules 8-1 through 8-n is detected, and the cell balancing is performed, but the output voltage of each of the battery modules 8-1 through 8-n can be detected after the lapse of a specified time after the ignition signal IG indicates the low level, thereby performing the cell balancing. Furthermore, after the ignition signal IG indicates the low level, and after charging the battery 2, the output voltage of each of the battery modules 8-1 through 8-n can be detected, thereby performing the cell balancing.

Furthermore, in the embodiment above, the external generator 3 is a solar generator, but the external generator 3 such as a charger for converting the AC power supplied from a commercial power supply into a DC power etc. is not limited specifically.

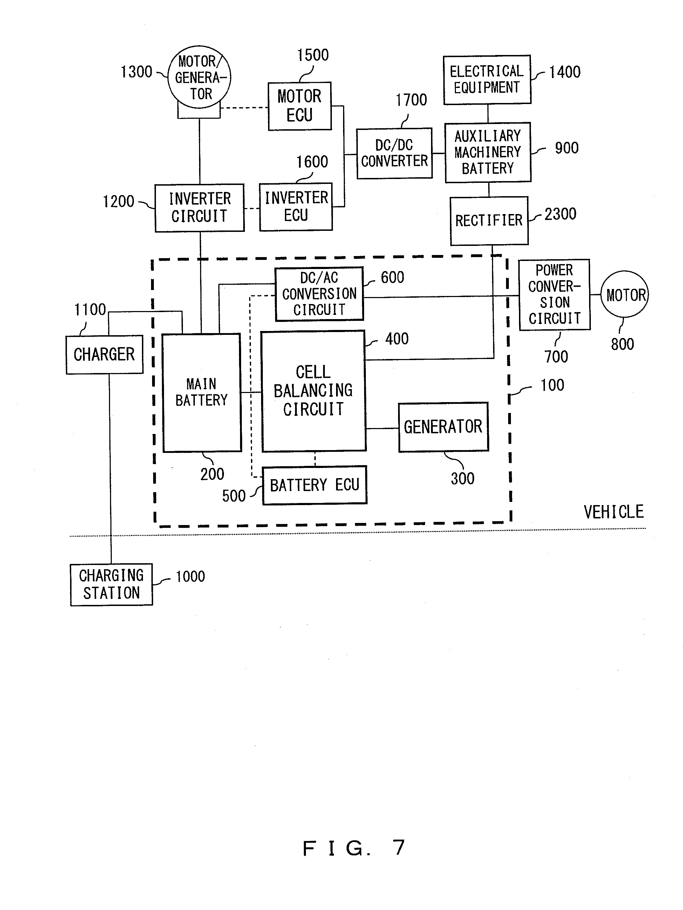

FIG. 7 illustrates the cell balancing device according to another embodiment of the present invention.

A cell balancing device 100 illustrated in FIG. 7 includes a main battery 200 having a plurality of battery modules configured by one or more battery cells, a generator 300 (for example, a solar generator etc.), a cell balancing circuit 400 for equalizing (hereafter referred to as cell balancing) the output voltage of each battery cell, a DC/AC conversion circuit 600, and a battery ECU (electronic control unit) 500 (control circuit) for controlling the operation of the cell balancing circuit 400 and the DC/AC conversion circuit 600. It is assumed that the battery ECU 500 is realized by the configuration including, for example, a processor and memory.

The cell balancing circuit 400 can charge each battery cell using the power supplied from the generator 300 during the cell balancing. The DC/AC conversion circuit 600 converts the DC power (for example, DC200V) supplied from the main battery 200 into single-phase AC power (for example, AC100V). The AC power converted by the DC/AC conversion circuit 600 is converted into 3-phase AC power by a power conversion circuit 700, and supplied as the driving power to a motor 800 configuring the compressor of an air-conditioner. The cell balancing circuit 400 can charge an auxiliary machinery battery 900 (for example, a lead battery etc.) with the power supplied from the main battery 200 after the cell balancing.

It is assumed that the cell balancing device 100 according to the present embodiment is loaded into a vehicle such as a hybrid vehicle, a plug-in hybrid vehicle, an electric vehicle, a fork lift, etc. When the main battery 200 is fully charged, it is charged with the power supplied from a charging station 1000 external to the vehicle through a charger 1100. In addition, the power supplied from the main battery 200 to a bi-directional inverter circuit 1200 is converted into 3-phase AC power by the inverter circuit 1200, and then supplied as driving power to a driving motor/generator 1300. The voltage of one battery cell during full charging, the voltage of the auxiliary machinery battery 900 during full charging, and the output voltage of the generator 300 are set at similar voltages (for example, 12 through 14V). In addition, the auxiliary machinery battery 900 supplies power to, for example, a motor ECU 1500 for controlling the operation of electrical equipment 1400 such as a car navigation system etc. and the motor/generator 1300 and an inverter ECU 1600 for controlling the operation of the inverter circuit 1200 through a DC/DC converter 1700.

Thus, since the cell balancing device 100 according to the present embodiment is provided with the cell balancing circuit 400, the variance of the output voltage of each battery cell of the main battery 200 can be suppressed.

Since the cell balancing device 100 further includes the DC/AC conversion circuit 600, it supplies single-phase AC power to the power conversion circuit 700 using the main battery 200. Therefore, if single-phase AC power is to be supplied to the power conversion circuit 700 when each battery cell is charged using the power supplied from the generator 300 during the cell balancing, the power supplied from the generator 300 to the main battery 200 can be used as the AC power converted by the DC/AC conversion circuit 600. Thus, since the power consumption of the main battery 200 while using an air-conditioner can be reduced, the distance traveled can be extended.

Furthermore, since the cell balancing device 100 according to the present embodiment can charge the auxiliary machinery battery 900 using the power supplied from the main battery 200 through the cell balancing circuit 400, it is not necessary to store excess DC/DC converter etc. for dropping the voltage of the main battery 200 and outputting the voltage to the auxiliary machinery battery 900, thereby suppressing a larger configuration. In addition, if power is supplied to the auxiliary machinery battery 900 after charging the main battery 200 using the power from the generator 300, the power used in charging the main battery 200 can be used as the power to be supplied to the auxiliary machinery battery 900. Thus, since the power consumption of the main battery 200 while using an air-conditioner can be reduced, the distance traveled can be extended.

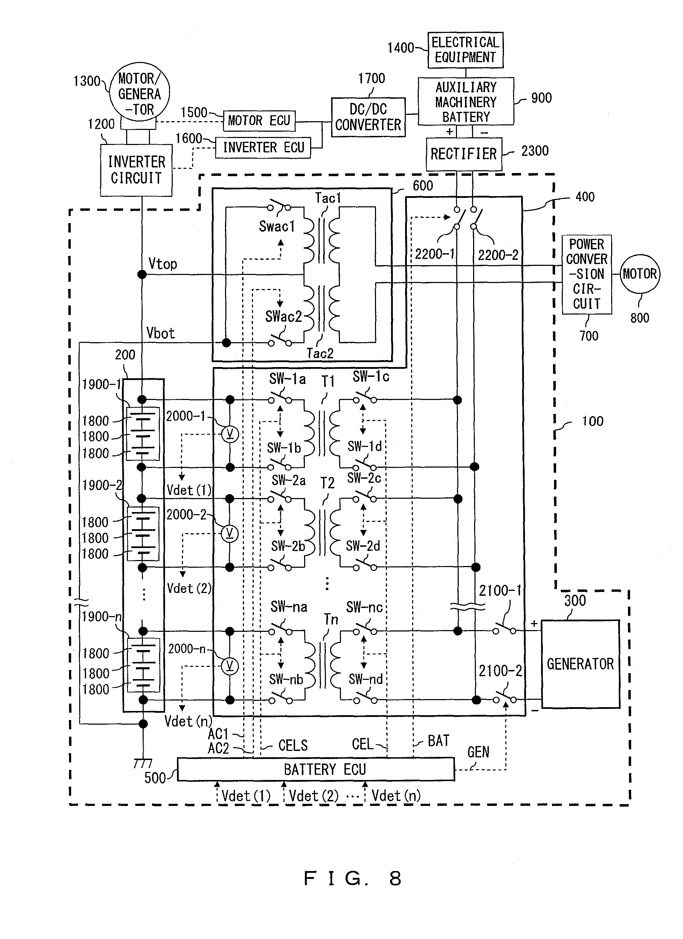

FIG. 8 is an example of the cell balancing circuit 400 and the DC/AC conversion circuit 600. It is assumed that the main battery 200 is configured by serially connecting n battery modules 1900 (a battery module 1900-1 (first battery module), a battery module 1900-2 (second battery module), ... and a battery module 1900-n (n-th battery module)) each configured by three serially connected battery cells 1800 (for example, rechargeable batteries such as a lithium ion secondary battery, a nickel-metal hydride rechargeable battery, etc.). The number of battery cells 1800 configuring one battery module 1900 is not limited to three. In addition, it is assumed that the anode terminal of the main battery 200 is connected to a virtual ground connected to, for example, the body of a vehicle.

The cell balancing circuit 400 illustrated in FIG. 8 includes voltage sensors 2000-1 through 2000-n. The voltage sensors 2000-1 through 2000-n are respectively connected to the cathode terminal and the anode terminal of the battery modules 1900-1 through 1900-n. The voltage sensors 2000-1 through 2000-n respectively detect the output voltages Vdet (1) through Vdet(n) of the battery modules 1900-1 through 1900-n.

The cell balancing circuit 400 illustrated in FIG. 8 are provided with one transformer T and four switches SW respectively for the battery modules 1900-1 through 1900-n. Each switch SW can be configured by, for example, an ASIC (application specific integrated circuit).

Furthermore, the cell balancing circuit 400 illustrated in FIG. 8 is provided with switches 2100-1 and 2100-2 (third switch) and switches 2200-1 and 2200-2 (fourth switch) . Each of the switches 2100-1 and 2100-2 and the switches 2200-1 and 2200-2 can be configured by a switching element such as a relay, a MOSFET (metal oxide semiconductor field effect transistor), etc.

For example, a transformer T1 (first transformer), switches SW-1a (first switch), SW-1b (first switch), SW-1c, and SW-1d are provided for the battery module 1900-1. A transformer T2 (second transformer), switches SW-2a (second switch), SW-2b (second switch), SW-2c, and SW-2d are provided for the battery module 1900-2. The same holds true with other battery modules 1900-3 through 1900-n. The first terminal of the first coil of the transformer T1 is electrically connected to the cathode terminal of the battery module 1900-1 through the switch SW-1a. The second terminal of the first coil of the transformer T1 is electrically connected to the anode terminal of the battery module 1900-1 through the switch SW-1b. The switch SW-1c is electrically connected to the first terminal of the second coil of the transformer T1, and the switch SW-1d is electrically connected to the second terminal of the second coil of the transformer T1. The same holds true with other transformers T2 through Tn. The first coil is one of the primary and secondary coils, and the second coil is the other of the primary and the secondary coils. In the transformers T1 through Tn, the turns ratio of the first and second coils is not specifically designated, but can be, for example, 1:1.

Each of the switches SW-1c, SW-2c, SW-3c, ..., SW-nc is electrically connected to one another, and connected to the cathode terminal of the generator 300 through the switch 2100-1, and connected to a rectifier 2300 through the switch 2200-1, and the output of the rectifier 2300 is connected to the cathode terminal of the auxiliary machinery battery 900. Each of the switches SW-1d, SW-2d, SW-3d, ..., and SW-nd are electrically connected to one another, connected to the anode terminal of the generator 300 through the switch 2100-2, and connected to the rectifier 2300 through the switch 2200-2, and the output of the rectifier 2300 is connected to the anode terminal of the auxiliary machinery battery 900.

The switches SW-1a through SW-na and the switches SW-1b through SW-nb are turned on and off according to a control signal CELS generated by the battery ECU 500. The duty of the control signal CELS is, for example, 50%. For example, when the switches SW-1a and SW-1b are turned on, the first coil of the transformer T1 is connected in parallel to the battery module 1900-1. The same holds true with the switches SW-2a through SW-na and the switches SW-2b through SW-nb. The switches SW-1c through SW-nc and the switches SW-1d through SW-nd are turned on and off according to the control signal CEL generated by the battery ECU 500. The duty of the control signal CEL is, for example, 50%. For example, when the switches SW-1c through SW-nc and the switches SW-1d through SW-nd are turned on, the second coils of the transformers T1 through Tn are connected in parallel. In this case, when the switches 2100-1 and 2100-2 are turned on according to the control signal GEN generated by the battery ECU 500, the second coils of the transformers T1 through Tn are electrically connected to the external generator 3. Otherwise, when the switches 2200-1 and 2200-2 are turned on according to the control signal BAT generated by the battery ECU 500, the second coils of the transformers T1 through Tn are electrically connected to the auxiliary machinery battery 900.

The DC/AC conversion circuit 600 illustrated in FIG. 8 includes transformers Tac1 and Tac2 and switches SWac1 and SWac2 for the entire main battery 200. That is, the first terminal of the first coil of the transformer Tac1 is connected to the anode terminal of the main battery 200 through the switches SWacl, and the second terminal of the first coil of the transformer Tac1 is connected to the cathode terminal of the main battery 200. In addition, the first terminal of the second coil of the transformer Tac1 is connected to one input terminal of the power conversion circuit 700, and the second terminal of the second coil of the transformer Tac1 is connected to the first terminal of the second coil of the transformer Tac2. In addition, the first terminal of the first coil of the transformer Tac2 is connected to the cathode terminal of the main battery 200, and the second terminal of the first coil of the transformer Tac2 is connected to the anode terminal of the main battery 200 through the switch SWac2. The second terminal of the second coil of the transformer Tac2 is connected to the other input terminal of the power conversion circuit 700. The first coil is one of the primary and secondary coils, and the second coil is the other of the primary and secondary coils. The turns ratio of the first and second coils in the transformer Tac1 and the turns ratio of the first and second coils in the transformer Tac2 are not specifically limited, but can be, for example, 2:1. The turns ratio of the first coil of the transformer Tac1 and the first coil of the transformer Tac2 and the turns ratio of the second coil of the transformer Tac1 and the second coil of the transformer Tac2 are not specifically limited, but can be, for example, 1:1. In addition, the transformers Tac1 and Tac2 of the DC/AC conversion circuit 600 and the transformers T1 through Tn of the cell balancing circuit 400 can be provided in one unit, but can be provided in the separate units.

The switch SWac1 is turned on and off according to a control signal AC1 generated by the battery ECU 500. The switch SWac2 is turned on and off according to a control signal AC2 generated by the battery ECU 500. The duty of the control signals AC1 and AC2 is, for example, 50%. For example, when the switch SWac1 is turned on and the switch SWac2 is turned off, then a current passes from the second terminal of the first coil of the transformer Tac1 to the first terminal, and a current passing from the second terminal of the second coil of the transformer Tac1 to the first terminal passes to the power conversion circuit 7. In addition, when the switch SWac1 is turned off and the switch SWac2 is turned on, a current passes from the first terminal of the first coil of the transformer Tac2 to the second terminal, and the current passing from the first terminal of the second coil of the transformer Tac2 to the second terminal passes to the power conversion circuit 7. Thus, by alternate turn-on and turn-off of the switches SWac1 and SWac2, a single-phase AC current passes from the transformers Tac1 and Tac2 to the power conversion circuit 7.

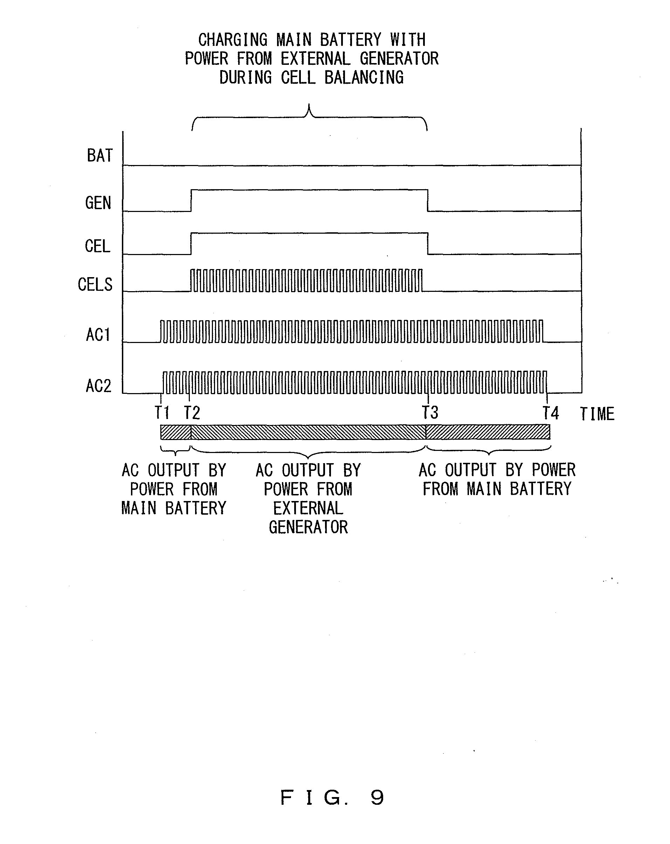

FIG. 9 is a schematic diagram of an example of the timing chart of the on/off state of each switch of the cell balancing circuit 400 and the DC/AC conversion circuit 600. When the control signal BAT indicates a high level, each of the switches 2200-1 and 2200-2 is turned on. When the control signal BAT indicates a low level, each of the switches 2200-1 and 2200-2 is turned off. When the control signal CEL indicates a high level, each of the switches SW-1c through SW-nc and the switches SW-1d through SW-nd is turned on. When the control signal CEL indicates a low level, each of the switches SW-1c through SW-nc and the switches SW-1d through SW-nd is turned off. When the control signal CELS indicates a high level, each of the switches SW-1a through SW-na and the switches SW-1b through SW-nb is turned on. When the control signal CELS indicates a low level, each of the switches SW-1a through SW-na and the switches SW-1b through SW-nb is turned off. Furthermore, when the control signal AC1 indicates a high level, the switch SWac1 is turned on. When the control signal AC1 indicates a low level, the switch SWac1 is turned off. When the control signal AC2 indicates a high level, the switch SWac2 is turned on. When the control signal AC2 indicates a low level, the switch SWac2 is turned off.

In the example illustrated in FIG. 9, in the periods T1 through T4, the switches SWac1 and SWac2 are alternately turned on and off according to the control signals AC1 and AC2. As described above, if the switches SWac1 and SWac2 are alternately turned on and off, the DC/AC conversion circuit 600 supplies AC power to the power conversion circuit 700.

In the example illustrated in FIG. 9, in the periods T2 through T3 in the periods T1 through T4, the switches SW-1a through SW-na and the switches SW-1b through SW-nb are turned on and off according to the control signal CELS, the switches SW-1c through SW-nc and the switches SW-1d through SW-nd are constantly turned on according to the control signal CEL, and the switches 2100-1 and 2100-2 are constantly turned on according to the control signal GEN. Then, an AC current passes through the first coil of the transformers T1 through Tn, and the first coil and the second coil of the transformers T1 through Tn are electromagnetically coupled to each other. In this case, for example, when the voltage of the first coil of the transformer T1 is higher than the output voltage of the battery module 1900-1, a current passes from the first coil of the transformer T1 to the battery module 1900-1, thereby charging the battery module 1900-1. Furthermore, for example, if the voltage of the first coil of the transformer T2 is lower than the output voltage of the battery module 1900-2, a current passes from the battery module 1900-2 to the first coil of the transformer T2, thereby discharging the battery module 1900-2. Then, if the output voltage of each of the battery modules 1900-1 through 1900-n is settled at the average voltage of the output voltage of the battery modules 1900-1 through 1900-n by the charging and discharging each of the battery modules 1900-1 through 1900-n, that is, if the output voltages of the battery modules 1900-1 through 1900-n are similar voltages, then each switch SW is turned off, thereby terminating the cell balancing. In this case, if the voltage of the generator 300 is higher than the voltage of the second coil of each of the transformers T1 through Tn, then a current passes from the generator 300 to the second coil of each of the transformers T1 through Tn, and the current almost equal to the current passing through each second coil passes through the first coil of each of the transformers T1 through Tn. That is, a current passes from the generator 300 to the battery modules 1900-1 through 1900-n through the transformers T1 through Tn, and each of the battery modules 1900-1 through 1900-n is charged. Thus, the output voltage of each of the battery modules 1900-1 through 1900-n is equalized, and each of the battery modules 1900-1 through 1900-n can be charged. Then, using the power supplied to the main battery 200, AC power can be supplied from the DC/AC conversion circuit 600 to the power conversion circuit 700.

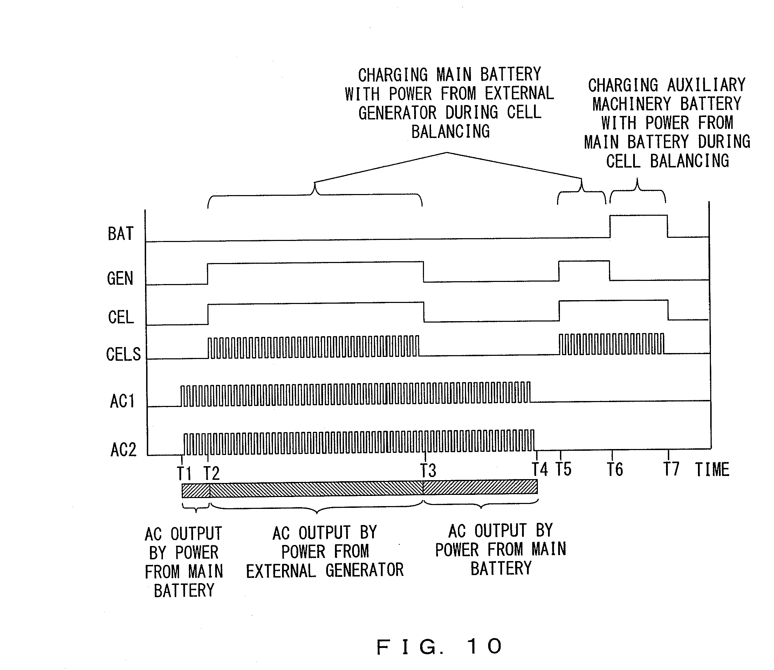

FIG. 10 is a schematic diagram of another example of the timing chart of the on/off state of each switch of the cell balancing circuit 400 and the DC/AC conversion circuit 600. In the example illustrated in FIG. 10, the periods T1 through T4 are similar to the periods T1 through T4 of the example illustrated in FIG. 9.

In the periods T5 through T6 in the example illustrated in FIG. 10, the switches SW-1a through SW-na and the switches 1b through SW-nb are turned on and off according to the control signal CELS, the switches SW-1c through SW-nc and the switches SW-1d through SW-nd are constantly turned on according to the control signal CEL, and the switches 2100-1 and 2100-2 are constantly turned on according to the control signal GEN. Thus, as described above, the output voltages of the battery modules 1900-1 through 1900-n are equalized, and each of the battery modules 1900-1 through 1900-n can be charged.

Next, in the periods T6 through T7 in the example illustrated in FIG. 10, the switches SW-1a through SW-na and the switches SW-1b through SW-nb are turned on and off according to the control signal CELS, the switches SW-1c through SW-nc and the switches SW-1d through SW-nd are constantly turned on according to the control signal CEL, and the switches 2200-1 and 2200-2 are constantly turned on according to the control signal BAT. The switches 2100-1 and 2100-2 are constantly turned off. In this case, for example, if the voltage of the second coil of each of the transformers T1 through Tn is higher than the voltage of the auxiliary machinery battery 900, a current passes from the second coil of each of the transformers T1 through Tn to the auxiliary machinery battery 900, thereby charging the auxiliary machinery battery 900.

Thus, during the cell balancing, after charging the main battery 200 by the power supplied from the generator 300, the auxiliary machinery battery 900 is charged by the power supplied from the main battery 200, thereby charging the auxiliary machinery battery 900 using the power supplied from the generator 300 to the main battery 200.

In the embodiment above, the switches SW-1a through SW-na and the switches SW-1b through SW-nb can be turned on and off until the output voltages Vdet(1) through Vdet(n) of each of the battery modules 1900-1 through 1900-n are lower than the upper limit threshold Vth1 (value higher by a specified value than the average value of the output voltages of each of the battery modules 1900-1 through 1900-n), and higher than the lower limit threshold Vth2 (value lower by a specified value than the average value of the output voltages of each of the battery modules 1900-1 through 1900-n) during the cell balancing.

The configuration in the embodiment above is to equalize the output voltage of each of the battery modules 1900-1 through 1900-n by simultaneously charging and discharging all of the battery modules 1900-1 through 1900-n, but can also be to equalize the output voltage of each of the battery modules 1900-1 through 1900-n by sequentially charging and discharging two of the battery modules 1900 in the battery modules 1900-1 through 1900-n.

Furthermore, in the embodiment above, when the auxiliary machinery battery 900 is charged, the power supplied from each of the battery modules 1900-1 through 1900-n is used, but the power supplied from a part of the battery modules 1900 in the battery modules 1900-1 through 1900-n can be used.

According to the present invention, while suppressing the variance of the output voltage of each battery module configuring a battery loaded into a vehicle, the reduction of the energy available in the entire battery can be suppressed after cell balancing.

The cell balancing device for equalizing the voltages of a plurality of battery cells configuring a main battery according to the present invention suppresses the reduction of the distance traveled while minimizing the variance of the output voltages of a plurality of battery cells.

A cell balancing device (1) includes a plurality of serially connected battery modules (8-1 through 8-n), an external generator (3), a transformer 16 including a first coil (20) and a plurality of second coils (21-1 through 21-n) connected in parallel to each of the battery modules (8-1 through 8-n), a switch (17) provided between the external generator (3) and the first coil (20), a cell balancing circuit (5) and a battery ECU (6) for electromagnetically coupling the first coil (20) and each of the second coils (21-1 through 21-n) by turning on and off the switch (17) when the difference between the output voltages of the battery modules (8-1 through 8-n) equals or exceeds a threshold.

## Claims

1. A cell balancing device (1), comprising:
a battery (2) provided with a plurality of battery modules (8) having one or more rechargeable batteries (7);
a battery monitor circuit (4) monitoring an output voltage of each of the battery module (8-1 through 8-n);
a cell balancing circuit (5) equalizing the output voltage of each of the battery module (8-1 through 8-n);
an external generator (3) supplying power to the cell balancing circuit (5); and
a control circuit (6) controlling cell balancing on the cell balancing circuit (5) so that the output voltage of each of the battery modules (8-1 through 8-n) can be stepped up by the power supplied by the external generator (3) while equalizing the output voltage of each of the battery modules (8-1 through 8-n) when a difference between the output voltages of the battery modules (8-1 through 8-n) detected by the battery monitor circuit (4) equals or exceeds a threshold.

2. The cell balancing device (1) according to claim 1, wherein:
the cell balancing circuit (5) comprises:
a first coil (20) connected to the external power supply (3);
second coils (21-1 through 21-n) transformer-coupled to the first coil (20) and connected in parallel with each of the battery modules (8-1 through 8-n); and
a first switch (17) provided between the external power supply (3) and the first coil (20), and
the control circuit (6) electromagnetically couples the first coil (20) and the second coils (21-1 through 21-n) by turning on and off the first switch (17) when the difference between the output voltages of the battery modules (8-1 through 8-n) equals or exceeds a threshold.

3. The cell balancing device (1) according to claim 1, wherein
when the difference between the output voltages of the battery modules (8-1 through 8-n) equals or exceeds the threshold, the control circuit (6) controls the cell balancing on the cell balancing circuit (5) until a lower output voltage is adjusted to a higher output voltage in the output voltages of the battery modules (8-1 through 8-n).

4. The cell balancing device (1) according to claim 2, wherein:
the cell balancing circuit (5) comprises a plurality of second switches (18-1 through 18-n, 19-1 through 19-n);
the battery monitor circuit (4) comprises:
a voltage detection circuit (9); and
a cell balancing execution determination circuit (11) turning on and off the first switch (17) when the voltage difference equals or exceeds the threshold in each voltage detected by the voltage detection circuit (9);
the control circuit (6) controls:
drive of the plurality of second switches (18-1 through 18-n, 19-1 through 19-n) when the output voltage of each of the battery modules (18-1 through 18-n) is detected, thereby connecting each of the battery modules (8-1 through 8-n) sequentially to the voltage detection circuit (9) and outputting the output voltage of each of the battery modules (18-1 through 18-n) sequentially to the voltage detection circuit (9); and
drive of each of the plurality of the second switches (18-1 through 18-n, 19-1 through 19-n) when the difference between the highest voltage and the lowest voltage of each voltage detected by the voltage detection circuit (9) equals or exceeds the threshold, thereby connecting in parallel each of the battery modules (8-1 through 8-n) and the second coils (21-1 through 21-n), and electromagnetically coupling the first coil (20) and second coils (21-1 through 21-n) by turning on and off the first switch (17).

5. A cell balancing device (100), comprising:
a main battery (200) having a plurality of battery modules (1900) configured by one or more battery cells (1800);
a generator (300);
a cell balancing circuit (400) equalizing an output voltage of each of the plurality of battery modules (1900-1 through 1900-n) by passing a current from a battery module outputting a voltage higher than an average voltage of the output voltages of each of the plurality of battery modules (1900-1 through 1900-n) to a battery module outputting a voltage lower than the average voltage;
a DC/AC conversion circuit (600) converting DC power supplied from the main battery (200) into AC power; and
a control circuit (500) controlling an operation of each of the cell balancing circuit (400) and the DC/AC conversion circuit (600), wherein
when the DC power is converted into the AC power in the DC/AC conversion circuit (600), the control circuit (500) supplies power from the generator (300) to each of the plurality of battery modules (1900-1 through 1900-n) through the cell balancing circuit (400).

6. The cell balancing device (100) according to claim 5, wherein:
the main battery (200) includes a first battery module (1900-1) and a second battery module (1900-n);
the cell balancing circuit (400) comprises: a first transformer (T1) having first and second coils; a first switch (SW-1a, SW-1b) provided between the first battery module (1900-1) and the first coil; a second transformer (T2) having third and fourth coils; a second switch (SW-2a, SW-2b) provided between the second battery module (1900-n) and the third coil; and a third switch (2100-1, 2100-2) provided between the second and fourth coils and the generator (300);
when the DC/AC conversion circuit (600) converts DC power into AC power, the control circuit (500) respectively turns on and off the first switch (SW-1a, SW-1b) and the second switch (SW-2a, SW-2b) respectively, and constantly turns on the third switch (2100-1, 2100-2).

7. The cell balancing device (100) according to claim 5, wherein
the control circuit (500) controls an operation of the cell balancing circuit (400) so that the power supplied from the main battery (200) can be supplied to an auxiliary machinery battery (900) through the cell balancing circuit (400).

8. The cell balancing device (100) according to claim 6, wherein:
the cell balancing circuit (400) comprises a fourth switch (2200-1, 2200-2) provided between the second and fourth coils and the auxiliary machinery battery (900); and
the control circuit (500) turns on and off the first switch (SW-1a, SW-1b) and the second switch (SW-2a, SW-2b), and constantly turns on the fourth switch (2200-1, 2200-2) when the power supplied from the main battery (200) is supplied to the auxiliary machinery battery (900) through the cell balancing circuit (400) .
